# EUROPÄISCHE PATENTANMELDUNG

(11) **EP 3 225 301 A1**
(43) Veröffentlichungstag der Anmeldung: **04.10.2017**
(21) Anmeldenummer: 17159674.5
(22) Anmeldetag: 07.03.2017
(51) Int. Cl.: B01F 13/10

(54) **ANORDNUNG ZUM HERSTELLEN VON MIT PIGMENT VERSETZTEN GEMENGEN**

(30) Priorität: 07.03.2016 AT 1202016
(71) Anmelder: w&p Baustoffe GmbH, 9020 Klagenfurt (AT)
(72) Erfinder: HOCHHOLDINGER, Roland, 9130 Poggersdorf (AT)
(74) Vertreter: Beer & Partner Patentanwälte KG

(57) **Zusammenfassung**

Eine Anordnung (1) zum Herstellen von mit Pigment versetzten, in Gebinden (22) enthaltenen Gemengen, wie Putzen, umfasst eine teilkreisförmige Förderbahn (2) und einen innerhalb der Förderbahn (2) vorgesehenen Roboter (4) zum Aufsetzen und Entfernen von Gemenge enthaltenden Gebinden (22). Der Förderbahn (2) sind eine Einrichtung (7) zum Zusetzen von Pigment und wenigstens eine Einrichtung (8) zum Mischen des mit Pigment versetzten Gemenges zugeordnet. Zusätzlich können der Förderbahn (2) Einrichtungen (9) für die Qualitätskontrolle, eine Einrichtung (10) zum Verschließen der Gebinde (22) und ein Aufgabebereich (6), in dem das Kennzeichnen des Gebindeinhaltes erfolgt, zugeordnet sein.

## Beschreibung

Die Erfindung betrifft einer Anordnung zum Herstellen von mit Pigment versetzten Gemengen.

Die im Rahmen der Erfindung in Betracht gezogenen Gemenge können sein: Putze, Farben und ähnliche Gemenge, insbesondere solche, die in der Bauindustrie und im Baugewerbe verwendet werden.

Derartige Gemenge, insbesondere Putze, werden durch Zugeben und Einmischen von Pigment in einer sogenannten "Tinting-Station" eingefärbt. Die Tätigkeit des Einfärbens von Gemengen ist mit sehr anstrengender, körperlicher Arbeit der mit dieser Arbeit befassten Arbeiter verbunden. Es müssen nämlich die 25 kg bis 30 kg schweren Gebinde von Paletten weg in die Station für die Zugabe des Pigmentes (Tinting-Station) hochgehoben werden.

EP 0 677 461 A1 zeigt einen als Rollenförderer ausgebildeten Staugutförderer, der Kurven umfasst. Innerhalb des Förderers sind zwei Roboter zum Handling von Stückgut vorgesehen. Hinweise auf das Pigmentieren von Gemengen finden sich in EP 0 677 461 A1 nicht.

In DE 10 2008 010 751 A1 ist eine Vorrichtung zum Herstellen von Mischungen umfassend Lagerbehälter mit Dosiervorrichtungen und Waagen beschrieben. Es ist erwähnt, dass die Mischbehälter auf einem Förderband an den Lagerbehältern, in denen die Einzelkomponenten vorrätig sind, vorbei bewegt werden.
Hinweise auf das Pigmentieren finden sich in DE 10 2008 010 751 A1 nicht.

US 2010/0125361 A1 betrifft einen Roboter, der dazu verwendet wird, Produkte von einer Förderbahn auf eine Palette umzusetzen.

JP 2003300594 A betrifft eine Vorrichtung zum Öffnen/Schließen von Fässern.

In DE 20 2008 012 827 U1 wird ein Mischer mit Mischflügeln beschrieben, die in einen Behälter eingeführt werden, um dessen Inhalt zu mischen.

US 4,525,071 A beschreibt eine Anordnung, mit der individuelle Chargen mit Zusätzen versetzt werden können. Dabei ist eine Fördereinrichtung zum Bewegen der Chargen vorgesehen.

Darauf müssen die Gebinde in einen Mischer eingesetzt und schließlich auf einer Palette geschlichtet werden.
Der Erfindung liegt die Aufgabe zugrunde, diese anstrengenden Arbeiten mit einer hierfür geeigneten Anordnung auszuführen, wobei händische Tätigkeiten wenigstens weitgehend entfallen.

Gelöst wird diese Aufgabe mit einer Anordnung, welche die Merkmale von Anspruch 1 aufweist.

Bevorzugte und vorteilhafte Ausgestaltungen der erfindungsgemäßen Anordnung sind Gegenstand der Unteransprüche.

Vorteilhafte Effekte, die sich insbesondere durch die Kombination von Merkmalen des neuen Patentanspruches 1 ergeben, sind beispielsweise:
- Einsparung von Mitarbeitern,
- höhere Geschwindigkeit,
- die Gebinde müssen nicht mehr in die Stationen hochgehoben werden,
- raumsparende Anordnung,
- Qualitätskontrolle möglich,
- es können nach dem Mischen "saubere" Deckel auf die Gebinde aufgesetzt werden
   - > die Qualität ist gesichert, weil keine "angetrocknete Masse" vom Deckel herunter in das Gemenge fallen kann.

Das mit der erfindungsgemäßen Anordnung einem Gemenge zugesetzte Pigment ist vornehmlich ein anorganisches, in Ausnahmefällen ein organisches, Pigment, das dem Gemenge, beispielsweise dem Putz, die gewünschte Farbe gibt.

Da bei der Erfindung eine, beispielsweise automatische, Förderbahn und, innerhalb derselben eine Vorrichtung zum Handhaben, wie Aufsetzen und Entfernen, von
Gemenge enthaltenden Gebinden vorgesehen ist, können die bisher von Arbeitern ausgeführten Hebearbeiten von der Vorrichtung zum Handhaben von Gemenge enthaltenden Gebinden übernommen werden. Die Vorrichtung zum Handhaben, wie Aufsetzen und Entfernen, von Gebinden ist beispielsweise ein Roboter, beispielsweise ein mehrachsiger Knickarm-Industrie-Roboter, der nach mehreren Freiheitsgraden beweglich ist.

Wenn ein Gebinde, das ein mit Pigment zu versetzendes Gemenge enthält, die Stationen der erfindungsgemäßen Anordnung durchlaufen hat, ist das Gemenge mit der gewünschten Menge an Pigment versetzt, gemischt, entsprechend gekennzeichnet und das Gebinde steht als Fertiggebinde zum Abtransport, beispielsweise auf einer Palette geschlichtet, bereit.

Im Rahmen der Erfindung kann vorgesehen sein, dass die Stellplätze für Gemenge enthaltende Gebinde und für Fertiggebinde als Stellplätze für Paletten ausgebildet sind.
Die im Rahmen der Erfindung vorgesehene Einrichtung zum Kennzeichnen von Gebinden kann als Station zum Etikettieren mit Hilfe eines Codes, insbesondere eines Strichcodes, ausgebildet sein.

Insbesondere der Einrichtung zum Kennzeichnen von Gebinden kann eine Einrichtung zum Öffnen der Gebinde, insbesondere zum Abnehmen von Gebindedeckeln, zugeordnet sein. Beispielsweise ist dabei vorgesehen, dass die Vorrichtung zum Handhaben (Aufsetzen und Entfernen) von Gemenge enthaltenden Gebinden auch das Öffnen von Gebinden ausführt, wozu es beispielsweise mit einem Haken versehen ist, der an einer Grifflasche von Gebindedeckeln angreift.

Die in der erfindungsgemäßen Anordnung vorgesehene Einrichtung zum Mischen kann als Rührwerk ausgebildet sein.

Alternativ kann die Einrichtung zum Mischen als gyroskopische Mischeinrichtung ("shaker") ausgebildet sein.

In einer Ausführungsform der erfindungsgemäßen Anordnung ist der Förderbahn eine Station für die Qualitätskontrolle zugeordnet.

Um ein geordnetes Abstellen von Fertiggebinden zu erlauben, kann der Förderbahn vor dem Stellplatz für Fertiggebinde eine Einrichtung zum Lesen von auf den Gebinden angebrachten und den Inhalt des Gebindes kennzeichnenden Datenträgern, wie Strichcodes, zugeordnet sein.

Die Förderbahn der erfindungsgemäßen Anordnung ist eine teilkreisförmige Förderbahn, wobei bevorzugt ist, dass die Förderbahn als Rollenbahn ausgebildet ist.

Weitere Einzelheiten und Merkmale der Erfindung ergeben sich aus der nachstehenden Beschreibung bevorzugter Ausführungsformen erfindungsgemäßer Anordnungen unter Bezugnahme auf die schematischen Zeichnungen. Es zeigt
- Fig. 1: eine erste Ausführungsform einer erfindungsgemäßen Anordnung,
- Fig. 2: eine zweite Ausführungsform einer erfindungsgemäßen Anordnung und
- Fig. 3: die Anordnung aus Fig. 1 mit mehr Einzelheiten.

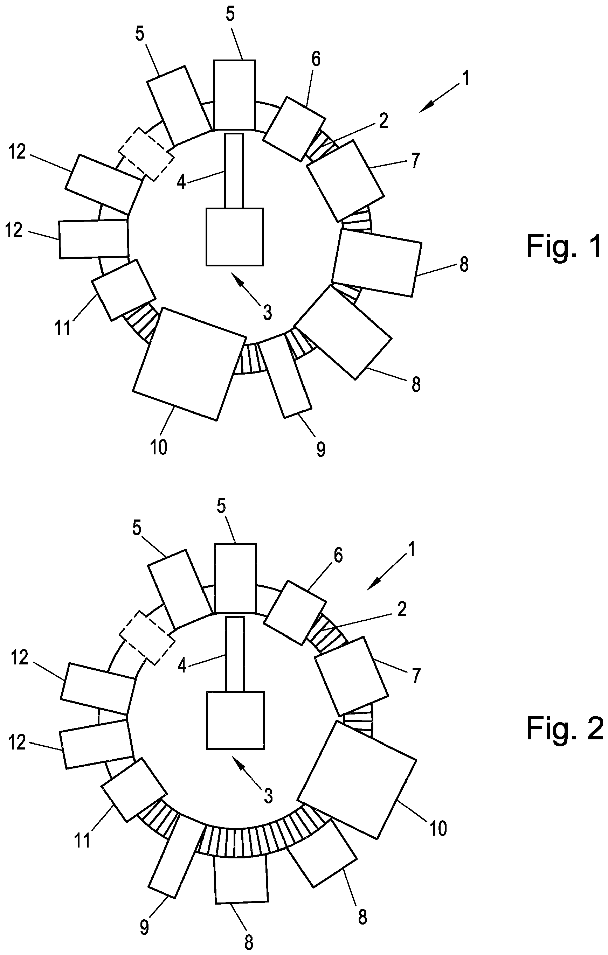

Die in Fig. 1 gezeigte Anordnung 1 umfasst eine teilkreisförmige, im Beispiel im Wesentlichen halbkreisförmige, Rollenbahn als Förderbahn 2 für mit Pigment zu versetzende Gemenge enthaltende Gebinde.

Innerhalb der Förderbahn 2 ist als Vorrichtung 3 zum Handhaben, nämlich zum Aufsetzen und Entfernen, von Gemenge enthaltenden Gebinden ein Roboter 4 vorgesehen, der wenigstens um eine lotrechte Achse drehbar und bevorzugt als Knickarm-Roboter mit mehreren Freiheitsgraden ausgebildet ist. Der Roboter 4 kann auch dazu eingesetzt werden, Stationen oder Bereichen der Anordnung 1 Gebinde zuzuführen und wieder zu entnehmen.

Der Förderbahn 2 der erfindungsgemäßen Anordnung 1 ist wenigstens ein Palettenstellplatz 5 für die Aufgabe von Gebinden ("Frischaufgabe"), deren Inhalt (Gemenge) mit wenigstens einem Pigment zu versehen ist, zugeordnet, in dem Paletten abgestellt werden können.

Im Anschluss an den Palettenstellplatz 5 ist - im Uhrzeigersinn gesehen - ein Aufgabebereich 6 auf die Förderbahn 2 vorgesehen. In dem Aufgabebereich 6 wird der Strichcode der Etikette des Gebindes eingelesen und auch das Etikettieren der Gebinde mit weiteren Strichcodes (Farbnummer, Chargennummer) vorgenommen. Des Weiteren werden die Gebinde, insbesondere die unteren Teile (Kübel) derselben, im Aufgabenbereich 6 fixiert, um das Öffnen der Gebinde durch Abnehmen der Gebindedeckel mit Hilfe des Roboters 4 zu erlauben. Hiezu kann der Roboter 4 mit einem Haken ausgestattet sein, der in eine Grifflasche des Gebindedeckels eingreift, wenn ein Gebinde durch Abheben des Gebindedeckels zu öffnen ist.

Nach dem Aufgabebereich 6 ist eine Station 7 zum Zusetzen von Pigment (Tinting-Station) vorgesehen, in der dem im Gebinde enthaltenen Gemenge das wenigstens eine ausgewählte Pigment in der jeweils erforderlichen Menge zugesetzt wird.
Im Anschluss an die Station 7 ist eine Mischeinrichtung 8 vorgesehen, die im Ausführungsbeispiel der Fig. 1 als Mischeinrichtung 8 mit automatischer Abreinigung der Mischwerkzeuge (Rührwerkzeuge) ausgebildet ist.

Im Anschluss an die erste Mischstation 8 ist im Ausführungsbeispiel von Fig. 1 eine zweite Mischstation 8, ebenfalls mit automatischer Abreinigung der Mischwerkzeuge (Rührwerkzeuge), vorgesehen.

Nach der zweiten Mischstation 8 ist eine Station 9 zur Qualitätskontrolle vorgesehen.

Im Anschluss an die Station 9 für die Qualitätskontrolle ist eine Einrichtung 10 vorgesehen, mit der Gebinde wieder verschlossen werden, wozu Deckel, beispielsweise aus einem Deckelmagazin, auf Unterteile (Kübel) der Gebinde aufgesetzt und angedrückt werden.

Nach dem Verschließen der Gebinde ist ein Abnahmebereich 11 für Fertiggebinde vorgesehen, dem ein Strichcodeleser zugeordnet ist.

Im Anschluss an den Abnahmebereich 11 sind zwei Stellplätze 12 für Fertiggebinde (Fertigware) in Form von Palettenstellplätzen vorgesehen.

Bei der in Fig. 1 gezeigten Ausführungsform der erfindungsgemäßen Anordnung ist vor dem Palettenstellplatz 5 für die Aufgabe von mit Pigment zu versehenden Gemengen gefüllten Gebinden ein zweiter Palettenstellplatz 5 für die Aufgabe von mit Pigment zu versehenden Gemengen gefüllten Gebinden vorgesehen.

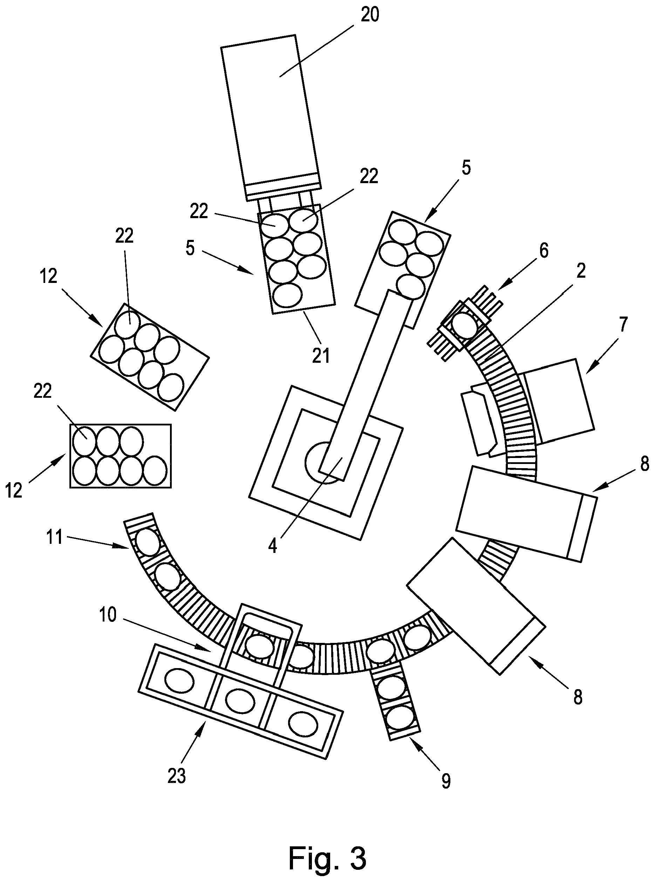

In Fig. 3 ist die Ausführungsform der erfindungsgemäßen Anordnung 1 von Fig. 1 mit mehr Einzelheiten dargestellt.

Fig. 3 zeigt einen Gabelstapler 20, der Paletten 21 mit Gebinden 22 auf einen der Palettenstellplätze 5 einstellt.

Fig. 3 ist auch zu entnehmen, dass die Förderbahn 2 teilkreisförmig ist und sich im in Fig. 3 gezeigten Beispiel über etwas mehr als einen Halbkreis erstreckt.

In Fig. 3 ist auch gezeigt, dass der Einrichtung 10 ein Deckelmagazin 23 zugeordnet ist, in dem Deckel für die Gebinde 22 bereitgestellt sind.

Das in Fig. 2 gezeigte Ausführungsbeispiel einer erfindungsgemäßen Anordnung 1 entspricht weitestgehend der in Fig. 1 gezeigten Ausführungsform, wobei nach der Tinting-Station 7 eine Einrichtung 10 zum Verschließen von Gebinden vorgesehen ist, wozu Deckel, beispielsweise aus einem Deckelmagazin, entnommen und auf Unterteile (Kübel) der Gebinde aufgesetzt und festgedrückt werden.

Im Anschluss an die Einrichtung 10 zum Verschließen von Gebinden sind im in Fig. 2 gezeigten Ausführungsbeispiel zwei gyroskopische Mischeinrichtungen 8 ("Shaker") vorgesehen, mit welchen die mit Pigment versetzten Gemenge in den Gebinden durchgemischt werden, um eine gleichmäßige Verteilung des Pigments zu erreichen. Nach der zweiten Mischstation 8 ist eine Station 9 zur Qualitätskontrolle vorgesehen.

Nach der Station 9 zur Qualitätskontrolle befindet sich an der etwa halbkreisförmigen Förderbahn 2 ein Abnahmebereich 11 für Fertiggebinde und, wie bei der Fig. 1 gezeigt, zwei Stellplätze 12 für Fertigware.

Sowohl bei der in Fig. 1 als auch bei der in Fig. 2 gezeigten Ausführungsform einer erfindungsgemäßen Anordnung 1 kann zwischen den Palettenstellplätzen 5 und 12 ein Zutrittsbereich vorgesehen sein, durch den Mitarbeiter den Bereich innerhalb der Förderbahn 2 betreten können.

Mit der in Fig. 1 gezeigten Anordnung kann beispielsweise wie folgt gearbeitet werden:
Ein Mitarbeiter stellt, beispielsweise mit Hilfe eines Gabelstaplers, Paletten 21 mit Gebinden 22, die mit Pigment zu versehende Gemenge enthalten, auf einen der Stellplätze 5. Der Roboter 4 erkennt das Packmuster auf der Palette 21 und hebt die Gebinde 22 nacheinander auf die Förderbahn 2. Im Aufgabebereich 6 wird der Strichcode des Gebindes 22 eingelesen und so das im Gebinde 22 enthaltene Gemenge erkannt. Des Weiteren wird im Aufgabebereich 6 auf dem Gebinde 22 ein zusätzlicher Strichcode mit Farbnummer und Artikelnummer angebracht.

Im Anschluss daran wird das Gebinde 22 von der Rollenbahn vom Aufgabebereich 6 zur Station 7 zum Zusetzen von Pigment (Tinting-Station) bewegt. Der Station 7 wird der Befehl erteilt, das in dem Gebinde 22 enthaltene Gemenge dem Auftrag entsprechend einzufärben, indem Pigment zugesetzt wird.

Die Förderbahn 2 fördert das Gebinde 22 weiter zur Mischstation 8, wobei je nach Auftragsnummer die eine oder andere der Mischstationen 8 verwendet wird.

Für die Qualitätskontrolle durch einen Mitarbeiter stoppt die Förderbahn 2 das erste und das letzte Gebinde 22 einer Charge in der Station 9 für die Qualitätskontrolle.

Hierbei kann eine Rückstellprobe gezogen und dafür das Gebinde 22, beispielsweise von einer automatischen Rollenbahn oder von dem Roboter 4, in eine Warteposition bewegt werden.

Nach erfolgter Probeentnahme wird das Gebinde 22 von einer automatischen Rollenbahn oder vom Roboter 4, wieder auf die Förderbahn 2 aufgegeben.

Im Anschluss daran wird in der Einrichtung 10 zum Schließen der Gebinde 22 der Gebindedeckel aus einem Deckel-Magazin 23 auf das Gebinde 22 aufgesetzt und fixiert, sodass das Gebinde 22 wieder geschlossen ist.

Im Abnahmebereich 11 wird mit Hilfe eines Strichcodelesers erkannt, um welches Gebinde 22 es sich handelt und auf welche der beiden Paletten 21, die in den Palettenstellplätzen 12 für Fertiggebinde bereitstehen, Gebinde 22 gestellt werden.

Der Roboter 4 stellt das Gebinde 22 auf die ausgewählte Palette 21 und ein Stapler entnimmt die fertige, mit Gebinden 22 (Fertiggebinde) beladene Palette 21 vom Palettenstellplatz 12 und fördert diese zur Folierung.

Mit der in Fig. 2 gezeigten Ausführungsform der erfindungsgemäßen Anordnung kann wie folgt gearbeitet werden: Ein Mitarbeiter stellt, beispielsweise mit Hilfe eines Gabelstaplers, Paletten 21 mit Gebinden 22, die mit Pigment zu versehende Gemenge enthalten, auf einen der Stellplätze 5. Der Roboter 4 erkennt das Packmuster auf der Palette 21 und hebt die Gebinde 22 nacheinander auf die Förderbahn 2. Im Aufgabebereich 6 wird der Strichcode des Gebindes 22 eingelesen und so das im Gebinde 22 enthaltene Gemenge erkannt. Des Weiteren wird auf dem Gebinde 22 im Aufgabebereich 6 ein zusätzlicher Strichcode mit Farbnummer und Artikelnummer angebracht.

Im Anschluss daran wird das Gebinde 22 von der als Rollenbahn ausgebildeten Förderbahn 2 vom Aufgabebereich 6 zur Station 7 zum Zusetzen von wenigstens einem Pigment (Tinting-Station) bewegt. Der Station 7 wird der Befehl erteilt, das in dem Gebinde 22 enthaltene Gemenge dem Auftrag entsprechend einzufärben, indem Pigment zugesetzt wird.

Im Anschluss daran wird in der Einrichtung 10 zum Schließen der Gebinde 22 der Gebindedeckel aus einem Deckel-Magazin 23 auf das Gebinde 22 aufgesetzt und fixiert, sodass das Gebinde 22 wieder geschlossen ist.

Die Förderbahn 2 befördert das Gebinde 22 weiter zur Mischstation
8, wobei je nach Auftragsnummer die eine oder andere der Mischstationen 8 verwendet wird. Für die Qualitätskontrolle durch einen Mitarbeiter stoppt die Förderbahn 2 das erste und das letzte Gebinde 22 einer Charge in der Station 9 für die Qualitätskontrolle. Hierzu kann eine Rückstellprobe gezogen werden und das Gebinde 22, beispielsweise von einer automatischen Rollenbahn oder vom Roboter 4, in eine Warteposition bewegt werden.

Nach erfolgter Probeentnahme wird das Gebinde 22, beispielsweise von einer automatischen Rollenbahn oder vom Roboter 4, wieder auf die Förderbahn 2 aufgegeben.

Im Abnahmebereich 11 wird mit Hilfe eines Strichcodelesers erkannt, um welches Gebinde 22 es sich handelt und auf welche der beiden Paletten 21, die in den Palettenstellplätzen 12 für Fertiggebinde bereitstehen, Gebinde 22 gestellt werden.

Der Roboter 4 stellt das Gebinde 22 auf die ausgewählte Palette 21 und ein Stapler entnimmt die fertige, mit Gebinden 22 (Fertiggebinde) beladene Palette 21 vom Palettenstellplatz 12 und fördert diese zur Folierung.

Zusammenfassend kann ein Ausführungsbeispiel der Erfindung wie folgt beschrieben werden:
Eine Anordnung 1 zum Herstellen von mit Pigment versetzten, in Gebinden 22 enthaltenen Gemengen, wie Putzen, umfasst eine teilkreisförmige Förderbahn 2 und einen innerhalb der Förderbahn 2 vorgesehenen Roboter 4 zum Aufsetzen und Entfernen von Gemenge enthaltenden Gebinden 22. Der Förderbahn 2 sind eine Einrichtung 7 zum Zusetzen von Pigment und wenigstens eine Einrichtung 8 zum Mischen des mit Pigment versetzten Gemenges zugeordnet. Zusätzlich können der Förderbahn 2 Einrichtungen 9 für die Qualitätskontrolle, eine Einrichtung 10 zum Verschließen der Gebinde 22 und ein Aufgabebereich 6, in dem das Kennzeichnen des Gebindeinhaltes erfolgt, zugeordnet sein.

## Patentansprüche

1. Anordnung (1) zum Herstellen von mit Pigment versetzten Gemengen, **gekennzeichnet durch**
- eine teilkreisförmige Förderbahn (2),
- eine innerhalb der Förderbahn (2)
angeordnete Vorrichtung (3) zum Aufsetzen und Entfernen von Gemenge enthaltenden Gebinden (22),
- wenigstens einen, der Förderbahn (2) zugeordneten, Stellplatz (5) für Gemenge enthaltende Gebinde (22),
- eine der Förderbahn (2) zugeordnete Einrichtung zum Kennzeichnen von Gebinden (22) mit der Art des Gemenges,
- eine der Förderbahn (2) zugeordnete Station (7) zum Zusetzen, insbesondere Dosieren, von Pigment in das Gemenge,
- eine der Förderbahn (2) zugeordnete Einrichtung (8) zum Mischen von mit Pigment versetztem Gemenge,
- eine der Einrichtung zum Kennzeichnen von Gebinden (22) zugeordnete Einrichtung zum Öffnen der Gebinde (22) **durch** Abnehmen von Gebindedeckeln,
- eine der Förderbahn (2) zugeordnete Einrichtung (10) zum Verschließen von Gebinden (22),
- eine der Förderbahn (2) zugeordnete Station (9) für die Qualitätskontrolle und
- wenigstens einen, der Förderbahn (2) zugeordneten, Stellplatz (12) für Fertiggebinde.

2. Anordnung nach Anspruch 1, **dadurch gekennzeichnet, dass** die Vorrichtung (3) zum Aufsetzen und Entfernen von Gebinden (22) einen mehrachsigen Roboter (4) umfasst.

3. Anordnung nach Anspruch 1 oder 2, **dadurch gekennzeichnet, dass** die Stellplätze (5, 12) als Stellplätze für Paletten (21) ausgebildet sind.

4. Anordnung nach einem der Ansprüche 1 bis 3, **dadurch gekennzeichnet, dass** die Einrichtung zum Kennzeichnen von Gebinden (22) als Station zum Etikettieren mit Strichcode ausgebildet ist.

5. Anordnung nach einem der Ansprüche 1 bis 4, **dadurch gekennzeichnet, dass** der Roboter (4) als Einrichtung zum Öffnen von Gebinden (22) ausgebildet ist.

6. Anordnung nach einem der Ansprüche 1 bis 5, **dadurch gekennzeichnet, dass** die Einrichtung (8) zum Mischen als Rührwerk ausgebildet ist.

7. Anordnung nach einem der Ansprüche 1 bis 5, **dadurch gekennzeichnet, dass** die Einrichtung (8) zum Mischen als gyroskopische Mischeinrichtung ausgebildet ist.

8. Anordnung nach einem der Ansprüche 1 bis 7, **dadurch gekennzeichnet, dass** der Förderbahn (2) vor dem Stellplatz (12) für Fertiggebinde eine Einrichtung zum Lesen von auf dem Gebinde (22) den Inhalt des Gebindes (22) kennzeichnenden Datenträgern, wie Strichcodes, zugeordnet ist.

9. Anordnung nach einem der Ansprüche 1 bis 8, **dadurch gekennzeichnet, dass** nebeneinander zwei Stellplätze (5) für Gebinde (22), die ein mit Pigment zu versetzendes Gemenge enthalten, vorgesehen sind.

10. Anordnung nach einem der Ansprüche 1 bis 9, **dadurch gekennzeichnet, dass** nebeneinander zwei Stellplätze (12) für Fertiggebinde vorgesehen sind.

11. Anordnung nach einem der Ansprüche 1 bis 10, **dadurch gekennzeichnet, dass** die Förderbahn (2) eine halbkreisförmige Förderbahn (2) ist.

12. Anordnung nach einem der Ansprüche 1 bis 11, **dadurch gekennzeichnet, dass** die Einrichtung (10) zum Verschließen nach der Station (9) für die Qualitätskontrolle (Fig. 1) bzw. nach der Station (7) zum Zusetzen von Pigment (Fig. 2) vorgesehen ist.

13. Anordnung nach einem der Ansprüche 8 bis 12, **dadurch gekennzeichnet, dass** der Förderbahn (2) in einem Abnahmebereich (11) eine Einrichtung zum Lesen von Datenträgern für Fertiggebinde zugeordnet ist.

14. Anordnung nach einem der Ansprüche 1 bis 13, **dadurch gekennzeichnet, dass** der Einrichtung zum Öffnen der Gebinde (22) eine Vorrichtung zum Festhalten des zu öffnenden Gebindes (22) zugeordnet ist.

15. Anordnung nach einem der Ansprüche 1 bis 14, **dadurch gekennzeichnet, dass** die Förderbahn (2) als Rollenbahn ausgebildet ist.
